# EUROPEAN PATENT SPECIFICATION

(11) **EP 3 775 657 B1**
(45) Date of publication and mention of the grant of the patent: **20.04.2022**
(21) Application number: 19721116.2
(22) Date of filing: 29.03.2019
(51) Int. Cl.: F16L 37/084, F16L 37/12

(54) **QUICK COUPLING FOR THREADED OR SHAPED TERMINALS**
SCHNELLKUPPLUNG FÜR GEWINDE- ODER FORMANSCHLÜSSE
ACCOUPLEMENT DU TYPE À ACTION RAPIDE POUR TERMINAUX FILETÉS OU FAÇONNÉS

(30) Priority: 30.03.2018 IT 201800004125
(43) Date of publication of application: 17.02.2021
(73) Proprietor: Polo S.R.L., 23841 Annone di Brianza (LC) (IT)
(72) Inventor: POZZI, Marco, 23841 Annone di Brianza (LC) (IT); LOCATELLI, Silvia, 23841 Annone di Brianza (LC) (IT)
(74) Representative: PGA S.p.A.
(86) International application number: PCT/IB2019/052611
(87) International publication number: WO 2019/186494

(56) References cited:
- WO-A1-2016/116827
- DE-U1- 29 808 654
- US-A- 5 209 528

## Description

### Field of the invention

The present invention relates to a quick coupling. In particular, the present invention relates to a device for the quick coupling of a duct of a circuit crossed by a fluid to a threaded or shaped terminal. The invention falls within the field of quick couplings capable of quickly and safely carrying out the operations of connection and disconnection of two different ducts crossed by fluids, avoiding the onerous tightening operations that would require the use of wrenches or other tools and ensuring both mechanical seal and hermetic seal. The use of such quick couplings is necessary, for example but not exclusively, when functional tests are carried out on products that require connection to pneumatic/oil-dynamic/hydraulic circuits (for example: boilers, radiators, motors, pumps, hydraulic/pneumatic cylinders, valves, etc.). Preferably but not necessarily, the device object of the present invention lends itself to uses in which the operating pressure can reach very high values, for example of a few hundred bars.

### Background art

Quick couplings are known which can be operated manually, with "push-pull" modes, whereby the connection step takes place by gripping a rear portion of the coupling and pushing it against the terminal to which it is connected until it is mechanically attached and retained and the disconnection step takes place by acting on an outer ferrule and pulling it away from the terminal.

In this regard, the prior art document WO 2017/006225, on behalf of the same Applicant, describes a quick coupling comprising: a substantially tubular main body internally delimiting a passage duct for a fluid, in which the main body has a first end configured to connect removably with a terminal and a second end configured to connect with a circuit; a plurality of jaws arranged around a main axis of the passage duct and operatively engaged with the main body at the first end. Each of the jaws is radially movable with respect to the main body between a first release position from the terminal and a second position of coupling to the terminal. Activation devices are operatively engaged with the jaws to cause the passage between the first position and the second position.

In an embodiment illustrated in document WO 2017/006225, the quick coupling is of the male type and the terminal is female and internally threaded. An obturator is located in a radially outer position with respect to the main body and the jaws, is axially movable with respect to the main body and has a head end intended to come into contact with a head end of the terminal.

The Applicant has observed that the working pressure of the fluid when the known type quick coupling is correctly coupled to the terminal, pushes the obturator against a wall of the terminal itself placing in tension the jaws whose ends are also integrally constrained to the terminal.

The Applicant has also observed that the axial load on the jaws is proportional to the working pressure and to an area of the obturator surfaces perpendicular to a main axis thereof on which the fluid under pressure acts and that this area is greater the more it extends radially away from a central axis of the coupling.

The Applicant has therefore observed that in the prior art couplings, for example like the one mentioned above, if the operating pressures are very high, the jaws, being usually elongated elements and of relatively small section, may be subjected to such high tensile stresses as to compromise the correct functioning thereof.

A quick coupling having a compensating chamber equalising the forces on the obturator is disclosed in DE 298 08 654 U1. The force on the obturator is only defined by a spring acting on the same.

### Object of the invention

In this context, the Applicant has set itself the goal of proposing a qualitatively superior quick coupling, in terms of performance, safety and even cost, compared to those of the prior art.

The Applicant has set itself the particular object of proposing a quick coupling which guarantees a mechanical coupling (with the respective threaded or shaped terminal) more precise and safer than the known terminals and therefore a safer seal even in the presence of high pressure fluids.

In particular, the Applicant has set itself the goal of proposing a quick coupling in which the mechanical stresses, in particular due to the pressure of the operating fluid, can be reduced or in any case controlled.

### Summary of the invention

The Applicant has found that these objectives and objects can be achieved by providing a quick coupling according to the present invention, of the type claimed in the appended claims and/or described in the following aspects.

In particular, the quick coupling according to the invention comprises a compensation chamber configured to control, in particular to reduce compared to the known art, the traction force withstood by the jaws when the quick coupling is correctly hooked to the terminal and crossed by the fluid at the operating pressure. According to an aspect, the present invention relates to a quick coupling for threaded or shaped terminals comprising a substantially tubular body internally delimiting a passage duct for a fluid, wherein said passage duct has a first end configured to removably connect with a terminal and a second end configured to connect with a circuit.

The substantially tubular body comprises:
a main body,
a plurality of jaws arranged at the first end and around a main axis of the passage duct, wherein the jaws are axially anchored to the main body, wherein the jaws are movable radially with respect to the main body between a first release position from the terminal, wherein ends of the jaws are radially spaced from the terminal, and a second position coupled to the terminal, wherein said ends of the jaws are integrally connected to the terminal;
activation devices operatively engaged with said jaws to cause the passage between the first position and the second position;
an obturator substantially tubular and coaxial to the main body, wherein the obturator is movable axially with respect to the main body, wherein said obturator has a head end intended to come into contact and to make seal with the terminal;

The obturator delimits with the main body a compensation chamber axially located between said obturator and said main body and in fluid communication with the passage duct so that the working fluid contained in said compensation chamber pushes or pulls the obturator axially away from the ends of the jaws.

The Applicant has verified that the solution according to the invention allows first of all the axial traction withstood by the jaws to be reduced.

The Applicant has also verified that the solution according to the invention allows designing the coupling by calibrating the sections in the compensation chamber so as to modulate the axial traction withstood by the jaws according to the specific application and/or materials used for the construction of the jaws and/or the operating pressures.

The Applicant has therefore verified that the invention allows obtaining the correct operation of the coupling with bearable forces on the jaws and therefore increase the level of resistance of the coupling as a whole and/or reach very high operating pressures and/or use less resistant and therefore less expensive materials. For example, the operating pressure withstood can exceed 1000 bar.

In one aspect, a substantially tubular body is made of metal, preferably of steel.

In one aspect, the obturator defines a main chamber and the compensation chamber with the main body.

In one aspect, the main chamber and the compensation chamber are sealed axially so that the working fluid contained in said main chamber and compensation chamber exerts opposite axial forces on the obturator with respect to the main body and the jaws.

By appropriately designing the aforementioned chambers and in particular the surface areas of said chambers it is therefore possible to modulate the opposing axial forces so as to obtain an effective and safe connection but also a high reliability of the coupling.

In one aspect, the obturator externally surrounds the main body and the main chamber and/or the compensation chamber is/are bounded radially between a radially outer surface of the main body and a radially inner surface of the obturator. In one aspect, the main body comprises a sealing portion having an intermediate seal acting against the radially inner surface of the obturator, wherein said sealing portion axially delimits said compensation chamber and/or said main chamber with the obturator.

In one aspect, the main body comprises an anchoring portion wherein the jaws are axially anchored to said anchoring portion.

In one aspect, the anchoring portion axially defines said compensation chamber and/or said main chamber with the obturator.

In one aspect, the anchoring portion and the sealing portion are substantially in the same axial position on the main body.

In one aspect, the anchoring portion and the sealing portion are integrated with one another.

In one aspect, the anchoring portion comprises a guide ring provided with radial guides in which the jaws can slide radially.

In one aspect, the anchoring portion comprises a locking ring constrained to the guide ring and configured to prevent axial movements of the jaws.

In one aspect, the locking ring houses the intermediate seal and therefore also defines the sealing portion.

In one aspect, the head end houses a head seal.

In one aspect, a rear portion of the obturator houses a rear seal acting on the main body.

In one aspect, the rear seal and the intermediate seal sealingly delimit the compensation chamber.

In one aspect, the intermediate seal and the head seal sealingly delimit the main chamber.

In one aspect, each jaw comprises an engaging portion with the terminal and a guide portion configured to slidably couple with one of the radial guides.

In one aspect, each of the jaws has an axially elongated shape. In one aspect, each of the jaws develops circumferentially according to an arched sector.

In one aspect, each jaw has an axially elongated shape, in which a first axial end of the jaw has the engaging portion and a second axial end of the jaw, opposite to the first one, has the guide portion.

In one aspect, the activation devices comprise a substantially tubular auxiliary body axially slidable relative to the main body.

In one aspect, said auxiliary body has an operative portion engaged or engageable with the jaws.

In one aspect, the auxiliary body is axially movable with respect to the main body between a retracted position with respect to the ends of the jaws corresponding to the release position of the jaws, and an advanced position, in which it radially pushes the jaws into the second position for coupling to the terminal.

In one aspect, the operative portion interacts with one side of the engaging portion of each jaw radially opposite to the side which engages the terminal.

In one aspect, the auxiliary body comprises a radially outer maneuvering ring configured to be gripped manually.

In one aspect, the maneuvering ring surrounds the obturator externally.

In one aspect, the auxiliary body comprises a radially inner tubular portion carrying the operative portion and internally delimiting at least part of the passage duct.

In one aspect, the anchoring portion and the sealing portion externally surround the radially inner tubular portion.

In one aspect, the obturator is radially interposed between the maneuvering ring and the main body.

In one aspect, the radially inner tubular portion has auxiliary radial openings in fluid communication with the compensation chamber.

In one aspect, the radially inner tubular portion has main radial openings in fluid communication with the main chamber.

In one aspect, the main body comprises a radially outer main ring configured to be gripped manually.

In one aspect, the main body comprises: a main portion positioned at one end of the coupling axially opposite to the first end; a radially inner portion with respect to the obturator extending axially from the main portion; said main ring mounted on the main portion, surrounding the radially inner portion and radially spaced from said radially inner portion.

In one aspect, the radially inner portion of the main body comprises the anchoring portion and the sealing portion.

In one aspect, the radially inner portion of the main body comprises the locking ring and the guide ring.

In one aspect, the main ring is axially arranged farther from the ends of the jaws than the maneuvering ring.

In one aspect, the maneuvering ring is partially inserted in the main ring.

In one aspect, the coupling comprises a locking device operatively interposed between the main body and the auxiliary body and selectively movable between a first position, in which it allows a relative axial movement between the main body and the auxiliary body, and a second position corresponding to the hooking position of the jaws, in which it prevents the relative axial movement between the main body and the auxiliary body.

In one aspect, the locking device comprises a radial protrusion or projection integral with the maneuvering ring and which can be housed in a recess formed in the main ring, or vice versa.

In one aspect, in the first position the radial projection is housed in the recess.

In one aspect, in the second position the radial projection is external to said recess and arranged against an edge of the main ring outside the recess.

In one aspect, the maneuvering ring is rotatable with respect to the main ring to allow housing the radial projection in the recess or to arrange said radial projection against an edge of the main ring outside the recess.

In one aspect, the auxiliary body comprises connection pins which radially connect the maneuvering ring with the radially inner tubular portion, to make them axially integral.

In one aspect, said connection pins are external to the passage duct.

In one aspect, the main body has radial passages configured to put the compensation chamber in fluid communication with the passage duct through the auxiliary radial openings of the radially inner tubular portion.

In one aspect, the radial passages are formed in the radially inner portion of said main body.

In one aspect, the second end of the passage duct is an end of the main body axially opposite to the first end of said passage duct. The passage of the fluid through the coupling is therefore in line.

In one aspect, the second end opens laterally on the auxiliary body. The passage of the fluid through the quick coupling is preferably 90°.

In one aspect, the second end is configured to be put into fluid communication with the passage duct through at least one radial opening formed in the obturator.

In one aspect, said at least one radial opening formed in the obturator opens in the compensation chamber.

In one aspect, in the first release position from the terminal, a relative axial position of the obturator with respect to the auxiliary body is such that the radial opening obtained in the obturator is closed. In this embodiment, the quick coupling therefore functions also as a check valve and prevents any dripping.

In one aspect, in the second position of engagement with the terminal, a relative axial position of the obturator with respect to the auxiliary body is such that the radial opening communicates with the second end.

In one aspect, one end of the main body axially opposite to the first end of the passage duct is closed.

In one aspect, the main body comprises a rod or shaft axially inserted so as to be able to slide in the radially inner tubular portion of the auxiliary body to fill part of the passage duct upstream of the second end. This shaft serves to reduce the inner volume of the quick coupling 1 and the bleeding of residual fluid when the coupling is disconnected.

In one aspect, the quick coupling comprises a main spring axially interposed between the main body and the auxiliary body and configured to push said auxiliary body towards the ends of the jaws.

In one aspect, the quick coupling comprises a spring axially interposed between the main body and the obturator and configured to push said obturator towards the ends of the jaws.

In one aspect, the spring is placed in the main chamber.

In one aspect, the quick coupling is of the male type and the jaws in the first position are radially closer to the main axis than the second position.

In one aspect, if the coupling is male, the jaws of said plurality of jaws, when in the first position, are preferably circumferentially juxtaposed one to the other and, preferably, when in the second position, they are spaced apart.

In one aspect, the auxiliary body is movable between a first configuration corresponding to the first release position from the terminal and a second configuration corresponding to the second coupling position to the terminal. In the first configuration, the auxiliary body is in a retracted position with respect to the engagement portions of the jaws. In the second configuration, the auxiliary body is in an advanced position towards the engagement portions of the jaws.

Further features and advantages will become more apparent from the detailed description of two preferred but non-exclusive embodiments of a quick coupling according to the present invention.

### Brief description of the drawings

Such description is given hereinafter with reference to the accompanying drawings, provided only for illustrative and, therefore, non-limiting purposes, in which:
- figure 1 shows a male quick coupling according to the present invention;
- figures 2A and 2B show a section according to a radial plane and according to a respective first and a respective second operative configuration of the male quick coupling in figure 1 associable/associated with a female terminal;
- figure 3 shows a section according to a radial plane and according to a first operative configuration of a different embodiment of the quick coupling in figures 1 and 2.

### Detailed description of preferred embodiments of the invention

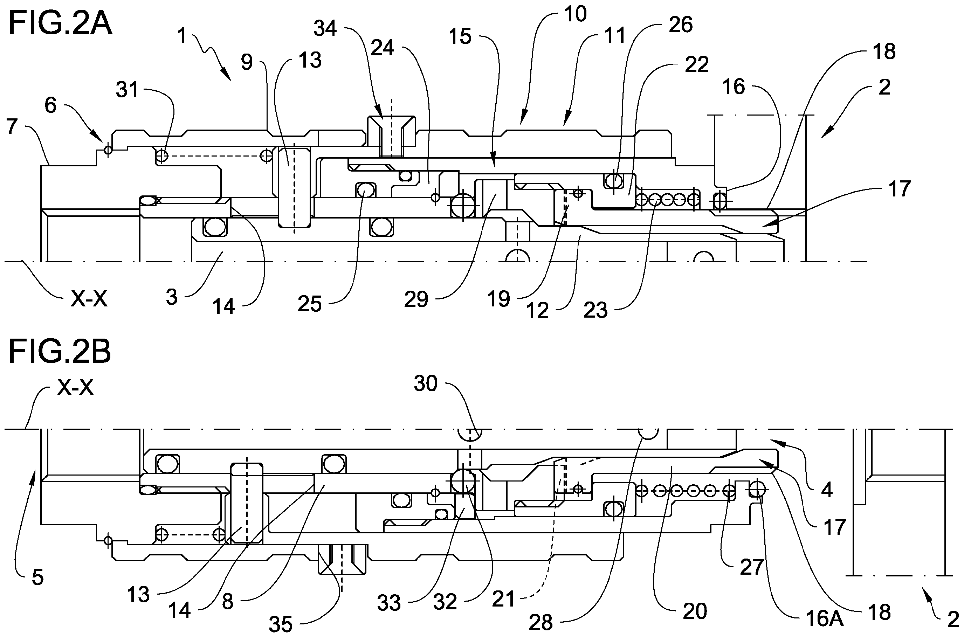

With reference to the accompanying figures, a quick coupling for threaded or shaped terminals has been indicated with reference numeral 1 as a whole. The accompanying figures show in particular a male quick coupling associated with a female threaded terminal 2. Figure 2A shows the quick coupling 1 in a first configuration in which the terminal 2 is separated and released from the quick coupling 1. Figure 2B shows the quick coupling 1 in a second configuration in which the terminal 2 is coupled to the quick coupling 1.

The quick coupling 1 is defined by a substantially tubular metal body, formed of several parts and internally delimiting a passage duct 3 for a fluid. The passage duct 3 extends along a main axis "X-X" and has a first end 4 configured to connect removably with the terminal 2 and a second end 5 configured to connect with a circuit, not shown.

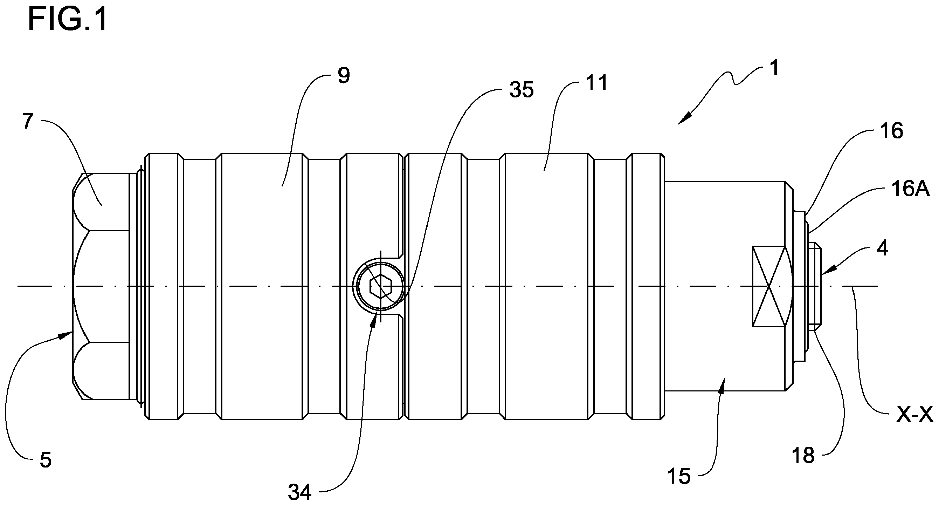

The substantially tubular body in figures 1, 2A, 2B comprises a main body 6 formed by a main portion 7 positioned at one end of the coupling 1 axially opposite to the first end 4, a radially inner portion 8 extending axially from the main portion 7 and a main ring 9 mounted on the main portion 7, surrounding the radially inner portion 8 and radially spaced from said radially inner portion 8. The radially inner portion 8 is screwed to the main portion 7. The main ring 9 is constrained to the outside of the main portion 7 by means of a retaining ring and is configured to be gripped manually. The main body 6 of the embodiment in figures 1, 2A, 2B defines the second end 5 of the passage duct 3 and the main ring 9 is axially positioned at said second end 5. The second end 5 of the passage duct 3 is axially opposite to the first end 4 of said passage duct 3.

The substantially tubular body in figure 1 comprises a substantially tubular auxiliary body 10, coaxial to the main body 7 and axially movable with respect to the main body 7. The auxiliary body 10 comprises a radially outer maneuvering ring 11 configured to be gripped manually and a radially inner tubular portion 12 internally delimiting at least part of the passage duct 3. In particular, the radially inner tubular portion 12 of the auxiliary body 10 is located radially inside the radially inner portion 8 of the main body 6. The maneuvering ring 11 is positioned radially outside the radially inner portion 8 of the main body 6 and is partially inserted in the main ring 9. Connecting pins 13 radially connect the maneuvering ring 11 with the radially inner tubular portion 12 passing through slots 14 formed in the radially inner portion 8, to make said maneuvering ring 11 and said radially inner tubular portion 12 axially integral with each other. The connecting pins 13 are external to the passage duct 3. The main ring 9 remains axially arranged further away from the first end 4 of the duct 3 with respect to the maneuvering ring 11. The substantially tubular body in figure 1 further comprises a substantially tubular obturator 15, coaxial and axially movable with respect to the main body 7. The obturator 15 is also axially movable with respect to the auxiliary body 10 and is radially located between the maneuvering ring 11 and the radially inner portion 8 of the main body 7, i.e. the maneuvering ring 11 externally surrounds the obturator 15. The obturator 15 has a head end 16 provided with a head seal 16A intended to come into contact and make a seal with the terminal 2. In the illustrated embodiment, the obturator 15 is formed by two parts screwed together.

The radially inner portion 8 of the main body 6 carries, at its own axially opposite end with respect to the main portion 7, a plurality of jaws 17 which are arranged at the first end 4 and around the main axis "X-X" of the passage duct 3. The jaws 17 are axially anchored to the main body 6 so as not to be able to slide axially with respect to said main body 6. The same jaws 17 are movable radially with respect to the main body 6. In particular, the jaws 17 are radially movable between a first release position from the terminal 2, in which the ends of the jaws 17 are radially spaced from the terminal 2 (figures 1 and 2B), and a second coupling position to the terminal 2, in which said ends of the jaws 17 are integrally engaged to the terminal 2 (figure 2A). Each of the jaw ends 17 develops circumferentially according to an arched sector.

In the illustrated embodiment, the ends of the jaws 17 have threaded or radially outer engagement portions 18. In the aforementioned first position, the jaws 17 are in a contracted configuration (figures 1 and 2B) in which they lie closer to each other than in the second configuration (figure 2A: radially expanded configuration). Each jaw 17 has a guide portion 19 located at an axial end opposite to the engagement portion 18. The engagement portion 18 protrudes radially inwards. The guide portion 19 and the engagement portion 18 are mutually connected by an elongated body 20 of the jaw 17 integral with the guide portion 19 and the engagement portion 18.

The guide portions 19 are housed in radial guides of a guide ring 21 defined by the radially inner portion 8 of the main body 6. Such radial guides allow the radial sliding of the guide portions 19. A locking ring 22, always part of the main body 6, prevents any axial movement of the guide portions 19. In the illustrated embodiment, such a locking ring 22 is screwed onto the radially inner portion 8 and is partly facing and distanced from the radial guides to receive the guide portions 19. The locking ring 22 and the guide ring 21 therefore define an anchoring portion of the main body 6 in which the jaws 17 are axially anchored. The radially inner tubular portion 12 of the auxiliary body 10 lies in contact with the jaws 17 and is part of activation devices operatively engaged with said jaws 17 to determine the passage thereof between the first position and the second position. In particular, a distal end of the radially inner tubular portion 12 has an operative portion defined by a bevel which operatively interacts with inclined surfaces formed on the ends of the jaws 17 from radially opposite parts with respect to the engagement portions 18.

In the first release position from the terminal 2 (figures 1 and 2B), the distal end of the radially inner tubular portion 12 lies axially retracted with respect to the ends of the jaws 17 and the bevel is in contact with the inclined surfaces of the jaws 17. In the second coupling position to the terminal 2 (figure 2A), the distal end of the radially inner tubular portion 12 lies in an axially advanced position and holds the ends of the jaws 17 in the radially expanded configuration. In the passage between the axially retracted and the axially advanced position, the bevel radially pushes the ends of the jaws 17 outwards.

The obturator 15 and the radially inner portion 8 of the main body 6 delimit a main chamber 23 and a compensation chamber 24 which are in fluid communication with the passage duct 3 so as to be at the same pressure as the operating fluid.

In particular, a rear portion of the obturator 15 is in contact with a radially outer surface of the radially inner portion 8 with the interposition of a rear seal 25. This rear portion of the obturator 15 remains axially arranged between the slots 14 and the anchoring portion of the main body 6. A front part of the obturator 15 is in contact with the jaws 17 when these are in the radially expanded configuration.

The locking ring 22 houses an intermediate seal 26 and defines a sealing portion associated with a seal to a radially inner surface of the obturator 15.

The rear seal 25 and the intermediate seal 26 sealingly delimit the compensation chamber 24. The intermediate seal 26 and the head seal 16A sealingly delimit the main chamber 23 (when the quick coupling 1 is connected to the terminal 2).

More in detail, the main chamber 23, when the quick coupling 1 is constrained to the terminal 2, is delimited by the obturator 15, by the sealing portion of the main body 6, by the radially inner tubular portion 12. The main chamber 23 houses part of the jaws 17 and a spring 27 axially interposed between the main body 6 and the obturator 15 and configured to push said obturator 15 towards the ends 18 of the jaws 17. The main chamber 23 is in fluid communication with the passage duct 3 through main radial openings 28 formed in the radially inner tubular portion 12 and/or through the gaps, not shown, between the jaws 17 which open in the terminal 2.

The compensation chamber 24 is delimited by the obturator 15, by the sealing portion and by the radially inner portion 8 of the main body 6. Radial passages 29 are formed in the radially inner portion 8 of the main body 6 and are configured to fluidly connect the compensation chamber 23 with the passage duct 3 through an annular chamber and auxiliary radial openings 30 formed in the radially inner tubular portion 12, which is radially internal with respect to the radially inner portion 8 of said main body 6.

The main chamber 23 and the compensation chamber 24 are sealed axially so that the working fluid contained therein exerts opposite axial forces on the obturator 15 with respect to the main body 6 and the jaws 17. In particular, the fluid in the main chamber 23 tends to push the main body 6 and the jaws 17 away from the terminal 2 and to push the obturator 15 against the terminal 2 and then to put the jaws 17 in traction along an axial direction. The fluid in the compensation chamber 24 tends to push the obturator 15 axially away from the engagement portions 18 of the jaws 17 and from the terminal 2 and therefore to at least partially reduce the aforementioned axial traction on said jaws 17. By appropriately designing the aforementioned chambers 23, 24 and in particular the surface areas of said chambers 23, 24 orthogonal to the main axis "X-X" it is therefore possible to modulate the opposing axial forces so as to obtain an effective and safe connection but also a high reliability of the quick coupling 1.

The quick coupling 1 comprises a main spring 31 axially interposed between the main body 6 and the auxiliary body 11 and configured to push said auxiliary body 11 towards the ends of the jaws 17. In the illustrated embodiment, the main spring 31 rests on the main portion 7 and the maneuvering ring 11 and is contained in a space radially interposed between the main ring 9 and said main portion 7.

The quick coupling 1 comprises radial seats for balls 32 formed in the radially inner portion 8 of the main body 6 in the vicinity of the radial passages 29 and a movable ring 33 housed in the compensation chamber 24 and movable axially therein with respect to the radially inner portion 8 and to the obturator 15.

The quick coupling 1 further comprises a locking device operatively interposed between the main body 6 and the auxiliary body 10 and selectively movable between a first position, in which it allows a relative axial movement between the main body 6 and the auxiliary body 10, and a second position corresponding to the hooking position of the jaws 17, in which it prevents the relative axial movement between the main body 6 and the auxiliary body 10. In particular, the locking device comprises a radial projection or protrusion 34 (bush with screw) integral with the maneuvering ring 11. The radial projection 34 extends radially outwardly and can be housed in a recess 35 formed on an edge of the main ring 9.

In the first configuration corresponding to the first release position from the terminal 2 illustrated in figures 1 and 2B, the spring 27 pushes and keeps the obturator 15 in an advanced position with respect to the main body 6. The balls 32 are housed and retained in the radial seats 31 by the movable ring 33 in turn held against the guide ring 21 by the obturator 15 pushed by the spring 27. The balls 32 project radially inwardly of the radially inner portion 8 of the main body 6 and hold the radially inner tubular portion 12 and the entire auxiliary body 10 in a retracted position with respect to the engagement portions 18 of the jaws 17 in which the main spring 31 is compressed. In this position, the radial projection 34 is housed in the recess 35 formed on an edge of the main ring 9.

To connect the quick coupling 1 to the terminal 2, an operator grasps the main ring 9 and pushes the head end 16 of the quick coupling 1 against the terminal 2, causing the obturator 15 to move backwards with respect to the main body 6 in contrast to the spring 27 which is compressed.

An internal relief of the obturator 15 comes into contact with the movable ring 33 and causes it to retract, releasing the balls 32 which are pushed radially outwards by the action of the radially inner tubular portion 12 pushed by the main spring 31. The balls 32 no longer protrude from the seats radially inwardly and therefore the main spring 31 advances the auxiliary body 10 towards the ends of the jaws 17. The distal end of the radially inner tubular portion 12 operatively interacts with the inclined surfaces formed on the ends of the jaws 17, causes the radial expansion thereof, which thus engage with the inner thread of the terminal 2, and holds them in said expanded position integrally anchored to the terminal 2 (figure 2A).

The maneuvering ring 11 together with the entire auxiliary body 10 are locked in such an advanced position by manually rotating said maneuvering ring 11 with respect to the main ring 9 and bringing the radial projection 34 against the edge of the main ring 9 outside the recess 35.

To disconnect the quick coupling 1 from the terminal 2, the operator grasps the maneuvering ring 11, rotates it until the radial projection 34 is brought at the recess 35 and pulls it away from the terminal 2.

The radial projection 34 enters the recess 35 and the distal end of the radially inner tubular portion 12 releases the jaws 17 which can contract and disengage from the terminal 2.

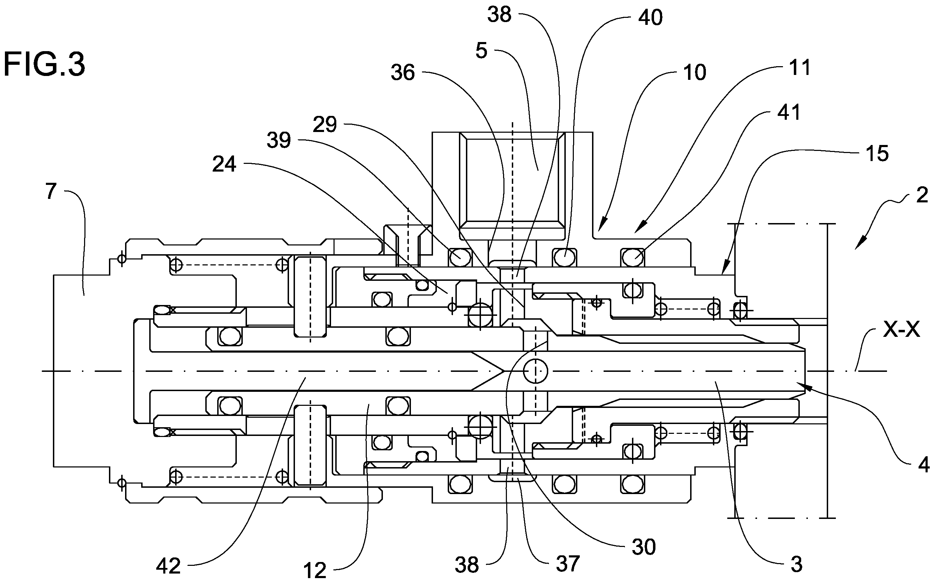

The embodiment of the quick coupling 1 shown in figure 3 differs from that just described in that the second end 5 of the passage duct 3 does not open on the main portion 7 but opens laterally on the auxiliary body 10. The first 4 and the second 5 ends of the passage duct 3 are arranged at 90° to each other. Moreover, the end of the main body 6 axially opposite to the first end 4 of the passage duct 3 and defined by the main portion 7 is closed.

A radial hole 36 passes through a wall of the maneuvering ring 11 and is in fluid communication with the aforementioned second end 5 and with an annular channel 37 formed on a radially inner surface of the maneuvering ring 11. A plurality of radial openings 38 formed in the obturator 15 can be selectively put in communication with the aforementioned annular channel 37 through the relative axial movement between the obturator 15 and the maneuvering ring 11. The radial openings 38 open in the compensation chamber 24.

A first seal 39 and a second seal 40 are mounted in the radially inner surface of the maneuvering ring 11 and are located on axially opposite sides of the annular channel 37. A third seal 41 is mounted in the radially inner surface of the maneuvering ring 11, positioned towards the first end 4 of the passage duct 3 and axially spaced from the second seal 40.

The main body 6 further comprises a rod 42 axially inserted so as to be able to slide in the radially inner tubular portion of the auxiliary body 10 to fill part of the passage duct 3 upstream of the second end 5. The rod 42 has a head locked between the aforementioned radially inner tubular portion 12 and the main portion 7 to which it is screwed.

In this embodiment, the quick coupling 1 also functions as a check valve. In fact, in the first release position from the terminal 2 (not shown), a relative axial position of the obturator 15 with respect to the auxiliary body 10 is such that the radial opening 38 formed in the obturator 15 is between the second and third seal 40, 41 whereby it is closed and also the radial hole 36 is closed, since it faces an outer wall of the obturator 15 and is comprised between the first and the second seal 39, 40. Thus, the first and second ends 4, 5 of the passage duct 3 are separated and isolated from each other.

In the second coupling position to the terminal 2 (figure 3), a relative axial position of the obturator 15 with respect to the auxiliary body 10 is such that the radial openings 38 are located between the first and second seal 41, 42 and communicate with the radial hole 36. In this position, the second end 5 of the passage duct 3 communicates, through the radial hole 36, the radial openings 38, the radial passages 29 and the auxiliary radial openings 30, with the first end 4.

## Claims

1. Quick coupling for threaded or shaped terminals, comprising:
a substantially tubular body internally delimiting a passage duct (3) for a fluid, wherein said passage duct (3) has a first end (4) configured to connect removably with a terminal (2) and a second end ( 5) configured to connect with a circuit;
wherein the substantially tubular body comprises:
a main body (6);
a plurality of jaws (17) arranged at the first end (4) and around a main axis (X-X) of the passage duct (3), wherein the jaws (17) are axially anchored to the main body (6), wherein the jaws (17) are movable radially with respect to the main body (6) between a first release position from the terminal (2), wherein ends of the jaws (17) are radially spaced from the terminal (2), and a second position coupled to the terminal (2), wherein said ends of the jaws (17) are integrally connected to the terminal (2);
activation devices operatively engaged with said jaws (17) to cause the passage between the first position and the second position;
an obturator (15) substantially tubular and coaxial to the main body (6), wherein the obturator (15) is movable axially with respect to the main body (6), wherein said obturator (15) has a head end (16) intended to come into contact and to make seal with the terminal (2);
wherein
the obturator (15) delimits with the main body (6) a compensation chamber (24) axially located between said obturator (15) and said main body (6) and in fluid communication with the passage duct (3) **characterised in that** the compensation chamber (24) is adapted so that the working fluid contained in said compensation chamber (24) pushes the obturator (15) axially away from the ends of the jaws (17).

2. Quick coupling according to claim 1, wherein the obturator (15) delimits with the main body (6) a main chamber (23) and the compensation chamber (24); wherein the main chamber (23) and the compensation chamber (24) are axially sealed apart so that the working fluid contained in said main chamber (23) and compensation chamber (24) exerts opposing axial forces on the obturator (15) with respect to the main body (6) and to the jaws (17).

3. Quick coupling according to claim 1 or 2, wherein the main body (6) comprises an anchoring portion (21, 22), wherein the jaws (17) are axially anchored to said anchoring portion (21, 22); wherein said anchoring portion (21, 22) axially delimits with said obturator (15) said compensation chamber (24).

4. Quick coupling according to one of the preceding claims 1 to 3, wherein the activation devices comprise an auxiliary body (10) substantially tubular and axially slidable with respect to the main body (6); wherein said auxiliary body (10) has an operative portion engaged or engageable with the jaws (17); wherein the auxiliary body (10) is movable axially with respect to the main body (6) between a position retracted with respect to the ends of the jaws (17) corresponding to the release position of the jaws (17), and an advanced position, in which it pushes radially the jaws (17) in the second position coupled to the terminal (2); wherein the auxiliary body (10) has an maneuvering ring (11) radially external and configured to be gripped by hand.

5. Quick coupling according to claim 4, wherein the auxiliary body (10) comprises a radially inner tubular portion (12) carrying the operative portion and internally delimiting at least part of the passage duct (3); wherein the radially inner tubular portion (12) has auxiliary radial openings (30) in fluid communication with the compensation chamber (24).

6. Quick coupling according to claim 4 or 5, wherein the main body (6) comprises a main ring (9) radially external and configured to be gripped by hand; wherein the main ring (9) is axially located farther from the ends of the jaws (17) than the maneuvering ring (11).

7. Quick coupling according to any one of the claims from 4 to 6, wherein the second end (5) opens laterally on the auxiliary body (10) and is configured to be put in fluid communication with the passage duct (3) through at least one radial opening (38) obtained in the obturator (15); wherein said at least one radial opening (38) formed in the obturator (15) opens into the compensation chamber (24).

8. Quick coupling according to claim 7, wherein in the first release position from the terminal (2) a relative axial position of the obturator (15) with respect to the auxiliary body (10) is such that the radial opening (38) obtained in the obturator (15) is closed; and wherein in the second position coupled to the terminal a relative axial position of the obturator (15) with respect to the auxiliary body (10) is such that the radial opening (38) communicates with the second end (5).

9. Quick coupling according to anyone of claims 7 or 8, wherein one end of the main body (6) axially opposite the first end (4) of the passage duct (3) is closed; wherein the main body (6) comprises a rod (42) inserted, axially and in such a way as to be able to slide, in the radially inner tubular portion (12) of the auxiliary body (10) to fill part of the passage duct (3) upstream of the second end (5).

10. Quick coupling according to any one of claims 4 to 9, wherein the auxiliary body (10) comprises connecting pins (13) which radially connect the maneuvering ring (11) with the radially inner tubular portion (12), to make them axially integral; wherein said connection pins (13) are external to the passage duct (3).

## Patentansprüche

1. Schnellkopplung für Gewinde- oder Formanschlüsse, umfassend:
einen im Wesentlichen rohrförmigen Körper, welcher einen Durchgangskanal (3) für ein Fluid innen begrenzt, wobei der Durchgangskanal (3) ein erstes Ende (4), welches dazu eingerichtet ist, entfernbar mit einem Anschluss (2) verbunden zu sein, und ein zweites Ende (5) aufweist, welches dazu eingerichtet ist, mit einem Kreislauf verbunden zu sein;
wobei der im Wesentlichen rohrförmige Körper umfasst:
einen Hauptkörper (6);
eine Mehrzahl von Backen (17), welche an dem ersten Ende (4) und um eine Hauptachse (X-X) des Durchgangskanals (3) angeordnet sind, wobei die Backen (17) axial an dem Hauptkörper (6) befestigt sind, wobei die Backen (17) in Bezug auf den Hauptkörper (6) zwischen einer ersten Freigabeposition von dem Anschluss (2), wobei Enden der Backen (17) von dem Anschluss (2) radial beabstandet sind, und einer mit dem Anschluss (2) gekoppelten zweiten Position radial bewegbar sind, wobei die Enden der Backen (17) integral mit dem Anschluss (2) verbunden sind;
Aktivierungsvorrichtungen, welche betriebsbereit mit den Backen (17) in Eingriff stehen, um den Durchgang zwischen der ersten Position und der zweiten Position zu erzeugen;
einen Verschluss (15), welche im Wesentlichen rohrförmig und koaxial zu dem Hauptkörper (6) ist, wobei der Verschluss (15) in Bezug auf den Hauptkörper (6) axial bewegbar ist, wobei der Verschluss (15) ein Kopfende (16) aufweist, welches dazu vorgesehen ist, mit dem Anschluss (2) in Kontakt zu treten und mit diesem eine Dichtung zu erzeugen;
wobei der Verschluss (15) mit dem Hauptkörper (6) eine Ausgleichskammer (24) begrenzt, welche axial zwischen dem Verschluss (15) und dem Hauptkörper (6) angeordnet ist und in Fluidverbindung mit dem Durchgangskanal (3) steht,
**dadurch gekennzeichnet, dass** die Ausgleichskammer (24) derart eingerichtet ist, dass das Arbeitsfluid, welches in der Ausgleichskammer (24) enthalten ist, den Verschluss (15) axial von den Enden der Backen (17) wegschiebt.

2. Schnellkopplung nach Anspruch 1, wobei der Verschluss (15) mit dem Hauptkörper (6) eine Hauptkammer (23) und die Ausgleichskammer (24) begrenzt; wobei die Hauptkammer (23) und die Ausgleichskammer (24) axial voneinander abgedichtet sind, sodass das Arbeitsfluid, welches in der Hauptkammer (23) und in der Ausgleichskammer (24) enthalten ist, in Bezug auf den Hauptkörper (6) und die Backen (17) entgegengesetzte Axialkräfte ausübt.

3. Schnellkopplung nach Anspruch 1 oder 2, wobei der Hauptkörper (6) einen Befestigungsabschnitt (21, 22) umfasst, wobei die Backen (17) axial an dem Befestigungsabschnitt (21, 22) befestigt sind; wobei der Befestigungsabschnitt (21, 22) die Ausgleichskammer (24) mit dem Verschluss (15) axial begrenzt.

4. Schnellkopplung nach einem der Ansprüche 1 bis 3, wobei die Aktivierungsvorrichtungen einen Zusatzkörper (10) umfassen, welcher im Wesentlichen rohrförmig ist und in Bezug auf den Hauptkörper (6) axial gleitbar ist; wobei der Zusatzkörper (10) einen Betriebsabschnitt aufweist, welcher mit den Backen (17) in Eingriff steht oder mit diesen in Eingriff bringbar ist; wobei der Zusatzkörper (10) in Bezug auf den Hauptkörper (6) zwischen einer in Bezug auf die Enden der Backen (17) zurückgezogenen Position, welche der Freigabeposition der Backen (17) entspricht, und einer vorgeschobenen Position axial bewegbar ist, in welcher er die Backen (17) radial in die zweite mit dem Anschluss (2) gekoppelte Position schiebt; wobei der Zusatzkörper (10) einen Verschiebering (11) aufweist, welcher radial außen ist und dazu eingerichtet ist, händisch greifbar zu sein.

5. Schnellkopplung nach Anspruch 4, wobei der Zusatzkörper (10) einen radial inneren Rohrabschnitt (12) umfasst, welcher den Betriebsabschnitt trägt und wenigstens einen Teil des Durchgangskanals (3) innen begrenzt, wobei der radial innere Rohrabschnitt (12) zusätzliche radiale Öffnungen (30) aufweist, welche in Fluidverbindung mit der Ausgleichskammer (24) stehen.

6. Schnellkopplung nach Anspruch 4 oder 5, wobei der Hauptkörper (6) einen Hauptring (9) umfasst, welcher radial außen ist und dazu eingerichtet ist, händisch greifbar zu sein; wobei der Hauptring (9) axial weiter von den Enden der Backen (17) entfernt ist als der Verschiebering (11).

7. Schnellkopplung nach einem der Ansprüche 4 bis 6, wobei sich das zweite Ende (5) an dem Zusatzkörper (10) lateral öffnet und dazu eingerichtet ist, durch wenigstens eine radiale Öffnung (38), welche in dem Verschluss (15) erhalten ist, mit dem Durchgangskanal (3) in Fluidverbindung gesetzt zu sein; wobei sich die wenigstens eine radiale Öffnung (38), welche in dem Verschluss (15) gebildet ist, in die Ausgleichskammer (24) öffnet.

8. Schnellkopplung nach Anspruch 7, wobei eine relative Axialposition des Verschlusses (15) in Bezug auf den Zusatzkörper (10) in der ersten Freigabeposition von dem Anschluss (2) derart ist, dass die radiale Öffnung (38), welche in dem Verschluss (15) erhalten ist, geschlossen ist; und wobei eine relative Axialposition des Verschlusses (15) in Bezug auf den Zusatzkörper (10) in der mit dem Anschluss gekoppelten zweiten Position derart ist, dass die radiale Öffnung (38) in Verbindung mit dem zweiten Ende (5) steht.

9. Schnellkopplung nach einem der Ansprüche 7 oder 8, wobei ein Ende des Hauptkörpers (6), welches zu dem ersten Ende (4) des Durchgangskanals (3) axial entgegengesetzt ist, geschlossen ist; wobei der Hauptkörper (6) eine Stange (42) umfasst, welche axial in den radial inneren Rohrabschnitt (12) eingeführt ist und in einer derartigen Weise, dass sie dazu in der Lage ist, darin zu gleiten, um einen Teil des Durchgangskanals (3) zu füllen, welcher dem zweiten Ende (5) vorgelagert ist.

10. Schnellkopplung nach einem der Ansprüche 4 bis 9, wobei der Zusatzkörper (10) Verbindungsstifte (13) umfasst, welche den Verschiebering (11) radial mit dem radial inneren Rohrabschnitt (12) verbinden, um diese axial einstückig zu machen; wobei die Verbindungsstifte (13) außen an dem Durchgangskanal (3) sind.

## Revendications

1. Raccordement rapide pour bornes filetées ou profilées, comprenant :
un corps sensiblement tubulaire délimitant au plan interne un conduit de passage (3) pour un fluide,
ledit conduit de passage (3) ayant une première extrémité (4) conçue le raccordement de manière amovible avec une borne (2) et une seconde extrémité (5) conçue pour le raccordement avec un circuit ;
le corps sensiblement tubulaire comprenant :
un corps principal (6) ;
une pluralité de mâchoires (17) disposées à la première extrémité (4) et autour d'un axe principal (X-X) du conduit de passage (3), les mâchoires (17) étant axialement ancrées au corps principal (6), les mâchoires (17) étant radialement mobiles par rapport au corps principal (6) entre une première position de libération de la borne (2), les extrémités des mâchoires (17) étant radialement espacées de la borne (2), et une seconde position raccordée à la borne (2), lesdites extrémités des mâchoires (17) étant intégralement raccordées à la borne (2) ;
des dispositifs d'activation fonctionnellement engagés avec lesdites mâchoires (17) pour amener le passage entre la première position et la seconde position ;
un obturateur (15) sensiblement tubulaire et coaxial par rapport au corps principal (6), l'obturateur (15) étant mobile axialement par rapport au corps principal (6), ledit obturateur (15) ayant une extrémité de tête (16) prévue pour entrer en contact et effectuer l'étanchéité avec la borne (2) ;
l'obturateur (15) délimitant avec le corps principal (6) une chambre de compensation (24) axialement localisée entre ledit obturateur (15) et ledit corps principal (6) et en communication fluidique avec le conduit de passage (3),
**caractérisé en ce que** la chambre de compensation (24) est adaptée de sorte que le fluide de travail contenu dans ladite chambre de compensation (24) pousse l'obturateur (15) axialement à l'opposé des extrémités des mâchoires (17).

2. Raccordement rapide selon la revendication 1, l'obturateur (15) délimitant avec le corps principal (6) une chambre principale (23) et la chambre de compensation (24) ;
la chambre principale (23) et la chambre de compensation (24) étant axialement scellées à part de sorte que le fluide de travail contenu dans lesdites chambre principale (23) et chambre de compensation (24) exerce des forces axiales opposées sur l'obturateur (15) par rapport au corps principal (6) et aux mâchoires (17).

3. Raccordement rapide selon la revendication 1 ou 2, le corps principal (6) comprenant une portion d'ancrage (21, 22), les mâchoires (17) étant axialement ancrées à ladite portion d'ancrage (21, 22); ladite portion d'ancrage (21, 22) délimitant axialement avec ledit obturateur (15) ladite chambre de compensation (24).

4. Raccordement rapide selon l'une des revendications précédentes 1 à 3, les dispositifs d'activation comprenant un corps auxiliaire (10) sensiblement tubulaire et pouvant axialement coulisser par rapport au corps principal (6) ; ledit corps auxiliaire (10) ayant une portion fonctionnelle engagée ou pouvant être engagée avec les mâchoires (17) ; le corps auxiliaire (10) étant mobile axialement par rapport au corps principal (6) entre une position rétractée par rapport aux extrémités des mâchoires (17) correspondant à la position de libération des mâchoires (17), et une position avancée, dans laquelle il pousse radialement les mâchoires (17) dans la seconde position accouplée à la borne (2) ; le corps auxiliaire (10) ayant un anneau de manœuvre (11) radialement externe et conçu pour être saisi par la main.

5. Raccordement rapide selon la revendication 4, le corps auxiliaire (10) comprenant une portion tubulaire radialement interne (12) portant la portion fonctionnelle et délimitant au plan interne au moins une partie du conduit de passage (3) ; la portion tubulaire radialement interne (12) ayant des ouvertures radiales auxiliaires (30) en communication fluidique avec la chambre de compensation (24).

6. Raccordement rapide selon la revendication 4 ou 5, le corps principal (6) comprenant un anneau principal (9) radialement externe et conçu pour être saisi par la main ; l'anneau principal (9) étant axialement localisé plus loin des extrémités des mâchoires (17) que l'anneau de manœuvre (11).

7. Raccordement rapide selon l'une quelconque des revendications de 4 à 6, la seconde extrémité (5) s'ouvrant latéralement sur le corps auxiliaire (10) et étant conçue pour être placée en communication fluidique avec le conduit de passage (3) à travers au moins une ouverture radiale (38) obtenue dans l'obturateur (15) ; ladite au moins une ouverture radiale (38) formée dans l'obturateur (15) s'ouvrant dans la chambre de compensation (24).

8. Raccordement rapide selon la revendication 7, dans la première position de libération de la borne (2) une position axiale relative de l'obturateur (15) par rapport au corps auxiliaire (10) est telle que l'ouverture radiale (38) obtenue dans l'obturateur (15) est fermée ; et dans la seconde position accouplée à la borne une position axiale relative de l'obturateur (15) par rapport au corps auxiliaire (10) est telle que l'ouverture radiale (38) communique avec la seconde extrémité (5).

9. Raccordement rapide selon l'une quelconque des revendications 7 ou 8, une extrémité du corps principal (6) axialement opposée à la première extrémité (4) du conduit de passage (3) étant fermée ; le corps principal (6) comprenant une tige (42) insérée, axialement et d'une manière telle à pouvoir coulisser, dans la portion tubulaire radialement interne (12) du corps auxiliaire (10) pour remplir une partie du conduit de passage (3) en amont de la seconde extrémité (5).

10. Raccordement rapide selon l'une quelconque des revendications 4 à 9, le corps auxiliaire (10) comprenant des broches de raccordement (13) qui relient radialement l'anneau de manœuvre (11) à la portion tubulaire radialement interne (12), pour les rendre axialement solidaires; lesdites broches de raccordement (13) étant externes vis-à-vis du conduit de passage (3).
